# EUROPEAN PATENT SPECIFICATION

(11) **EP 4 213 253 B1**
(45) Date of publication and mention of the grant of the patent: **05.03.2025**
(21) Application number: 22214221.8
(22) Date of filing: 16.12.2022
(51) Int. Cl.: H01M 8/0265

(54) **BIPOLAR PLATE FOR FUEL CELL AND FUEL CELL INCLUDING THE SAME**
BIPOLARE PLATTE FÜR EINE BRENNSTOFFZELLE UND BRENNSTOFFZELLE DAMIT
PLAQUE BIPOLAIRE POUR PILE À COMBUSTIBLE ET PILE À COMBUSTIBLE LA COMPRENANT

(30) Priority: 12.01.2022 KR 20220004721
(43) Date of publication of application: 19.07.2023
(73) Proprietor: Hyundai Motor Company, Seoul 06797 (KR); Kia Corporation, Seocho-gu Seoul 06797 (KR)
(72) Inventor: KIM, Sun Hwi, 16891 Yongin-si (KR); KIM, Hyun Jeong, 16891 Yongin-si (KR); KIM, Ah Reum, 16891 Yongin-si (KR); KIM, Bae Jung, 16891 Yongin-si (KR); CHOI, Hyun Kyu, 16891 Yongin-si (KR); KIM, Chan Gi, 16891 Yongin-si (KR)
(74) Representative: Viering, Jentschura & Partner mbB Patent- und Rechtsanwälte

(56) References cited:
- CN-A- 107 785 595
- US-A- 5 409 056
- US-A1- 2005 266 296
- US-A1- 2007 298 311

## Description

### CROSS-REFERENCE TO RELATED APPLICATION

This application claims priority to and the benefit of Korean Patent Application No. 10-2022-0004721, filed on January 12, 2022.

### BACKGROUND

### 1. Technical Field

The present disclosure relates to a bipolar plate for a fuel cell.

### 2. Discussion of Related Art

In general, fuel cells are energy conversion devices that generate electric energy through an electrochemical reaction between a fuel and an oxidizing agent and have an advantage of continuously generating electricity as long as a fuel is continuously supplied.

A catalyst is required to cause an electrochemical reaction between a fuel and an oxidizing agent. In this case, a chemical reaction between the fuel and the oxidizing agent causes an exothermic reaction, and in order to prevent damage to a fuel cell due to heat generation, an operating temperature of the fuel cell should be maintained constant using a cooling fluid such as a coolant.

Accordingly, a bipolar plate is used to facilitate the supply and discharge of a fuel, an oxidizing agent, and a cooling fluid and a chemical reaction. A flow path for the fuel, a flow path for the oxidizing agent, and a flow path for the cooling fluid are formed in the bipolar plate.

However, in the conventional bipolar plate for a fuel cell plate, there has been a phenomenon in which heat transfer occurs only at a portion adjacent to a bipolar plate in a process in which a cooling fluid flows from an inlet to an outlet. Accordingly, there is a problem in that the cooling efficiency through a cooling fluid (hereinafter referred to as a "fluid") is lowered because heat is not sufficiently transferred from the bipolar plate.

In addition, since a chemical reaction between a fuel and an oxidizing agent causes an exothermic reaction, when heat is not sufficiently transferred through a fluid, there is a problem in that a bipolar plate is burned due to the exothermic reaction, which reduces the operating efficiency of a fuel cell.

CN 107 785 595 A discloses a fuel cell including a cooling fluid channel. The cooling fluid channel is provided with baffles. The baffles are arranged in any of a semi-cylindrical shape, a prism shape, a hemispherical shape, and a pyramid shape. The baffles are arranged to traverse the flow direction of the fluid and the longitudinal direction of the channel.

US 2005/266296 A1 discloses a fuel cell system including a coolant channel. The coolant channel includes a surface defining a contact-area extension surface for increasing the contact area of the coolant.

US 2007/298311 A1 discloses a fuel cell including a separator structure. The separator includes bosses formed on the grooves on the side of the electrodes to increase gas diffusion.

US 5 409 056 A discloses U-flow tubing for evaporators with bump arrangement for optimized forced convection heat exchange. The plates of the U-flow tube have a predetermined pattern of oblong or generally elliptical indented bumps in the side paths. The bumps have major axes formed at a low acute angle with respect to the longitudinal axis of the plates to generate forced convection and to avoid unduly adding to the pressure drop across the evaporator.

### SUMMARY

The present disclosure is directed to providing an improved bipolar plate for a fuel cell capable of improving the cooling efficiency of a fluid passing through the bipolar plate, and a fuel cell including the same. According to the present invention, a bipolar plate is set for the in claim 1 and a fuel cell including the same is provided in claim 11.

According to an aspect of the present disclosure, there is provided a bipolar plate for a fuel cell including a first plate, a second plate coupled to the first plate to form a channel in which a fluid flows, and a plurality of protrusions disposed apart from each other in the channel in a flow direction of the fluid.

The channel includes a first surface of the first plate and a second surface of the second plate facing the first surface, and the plurality of protrusions may include a first protrusion protruding from the first surface toward the second surface, and a second protrusion protruding from the second surface toward the first surface.

Each of the first protrusion and the second protrusion includes a first protruding body disposed in an oblong shape in the flow direction of the fluid, and second protruding bodies protruding in a round shape from both ends of the oblong shape of the first protruding body.

The first protruding body of the first protrusion may protrude from the first surface toward the second surface to have the round shape, and the first protruding body of the second protrusion may protrude from the second surface toward the first surface to have the round shape.

The first protrusion body of the first protrusion may include a first groove that is concave in a direction from the second surface toward the first surface, and the first protruding body of the second protrusion may include a second groove that is concave in a direction from the first surface toward the second surface.

The first groove and the second groove may extend in the flow direction of the fluid.

Each of the first protrusion and the second protrusion may have a cylindrical shape.

Each of the first protrusion and the second protrusion may protrude in a hemispherical shape toward a center of the channel.

The first protrusion and the second protrusion may be disposed to overlap each other in a direction from the first surface toward the second surface.

The first protrusion and the second protrusion may be disposed to not face each other in a direction from the first surface toward the second surface.

The channel may further include a third surface between the first surface and the second surface and a fourth surface facing the third surface, the third surface may have a portion included in the first plate and another portion included in the second plate, the fourth surface may have a portion included in the first plate and another portion included in the second plate, and an angle between the first surface and the third surface may be in a range of 90° to 110°.

The plurality of protrusions may include a third protrusion disposed on any one of the third surface and the fourth surface, and a fourth protrusion disposed on the other of the third surface and the fourth surface.

According to another aspect of the present disclosure, there is provided a fuel cell including a membrane electrode assembly, a gas diffusion layer disposed at each of one side and the other side of the membrane electrode assembly, and a bipolar plate disposed outside the gas diffusion layer, wherein the bipolar plate includes a first plate, a second plate coupled to the first plate to form a channel in which a fluid flows, and a plurality of protrusions disposed apart from each other in the channel in a flow direction of the fluid.

The plurality of protrusions may be formed through a photolithography process.

### BRIEF DESCRIPTION OF THE DRAWINGS

FIG. 1 is a schematic view illustrating a fuel cell according to an embodiment of the present disclosure.
FIG. 2 is a schematic perspective view illustrating a portion of a bipolar plate for a fuel cell according to an embodiment of the present disclosure.
FIG. 3 is a front view illustrating a portion of the bipolar plate for a fuel cell according to the embodiment of the present disclosure.
FIG. 4 is a side view illustrating a portion of the bipolar plate for a fuel cell according to an embodiment of the present disclosure.
FIG. 5 is an enlarged view illustrating a first protrusion according to an embodiment of the present disclosure.
FIG. 6 is an enlarged view illustrating a second protrusion according to an embodiment of the present disclosure.
FIG. 7 is a view illustrating a state in which the second protrusion is disposed to not face the first protrusion according to an embodiment of the present disclosure.
FIG. 8 is a flowchart illustrating a process in which a first protrusion is formed on a first plate through a photolithography process according to an embodiment of the present disclosure.
FIG. 9 is a view illustrating a first protrusion and a second protrusion according to another embodiment of the present disclosure.
FIGS. 10 and 11 are views illustrating a first protrusion and a second protrusion according to other embodiments of the present disclosure.
FIG. 12 is a view illustrating a bipolar plate for a fuel cell according to another embodiment of the present disclosure.

### DETAILED DESCRIPTION OF EXEMPLARY EMBODIMENTS

While the present disclosure is open to various modifications and alternative embodiments, specific embodiments thereof will be described and shown by way of example in the accompanying drawings. However, it should be understood that there is no intention to limit the present disclosure to the particular embodiments disclosed, and on the contrary, the present disclosure is to cover all modifications, equivalents, and alternatives falling within the spirit and scope of the present disclosure.

It should be understood that, although terms including ordinal numbers such as "first," "second," and the like may be used herein to describe various elements, the elements are not limited by the terms. These terms are only used for the purpose of distinguishing one element from another element. For example, without departing from the scope of the present disclosure, a second element could be termed a first element, and similarly a first element could be also termed a second element. The term "and/or" includes any one or all combinations of a plurality of associated listed items.

In the case that one component is described as being "connected" or "linked" to another component, it may be connected or linked to the corresponding component directly or other components may be present therebetween. On the other hand, in the case that one component is described as being "directly connected" or "directly linked" to another component, it should be understood that other components are not present therebetween.

In an embodiment, when an element is referred to as being formed "on" or "under" another element, the description includes the meaning of the two elements being in direct contact with each or the element being indirectly on or under the other element with one or more elements interposed therebetween. Further, when an element is referred to as being formed "on" or "under" another element, the description may include the meaning of the other element being "formed in an upward direction of the element" and "formed in a downward direction of the element."

It is to be understood that terms used herein are for the purpose of the description of particular embodiments and not for limitation. A singular expression includes a plural expression unless the context clearly indicates otherwise. It will further be understood that the terms "comprises" and/or "comprising," when used in this specification, specify the presence of stated features, integers, steps, operations, elements, components, and/or groups thereof but do not preclude the presence or addition of one or more other features, integers, steps, operations, elements, components, and/or groups thereof.

Unless defined otherwise, all the terms (including technical and scientific terms) used herein have the same meaning as commonly understood by one of ordinary skill in the art to which the present disclosure belongs. It will further be understood that terms such as those defined in commonly used dictionaries should be interpreted as having meanings that are consistent with their meanings in the context of the relevant art and should not be interpreted in an idealized or overly formal sense unless expressly defined otherwise herein.

Hereinafter, embodiments will be described in detail with reference to the accompanying drawings, wherein the same or corresponding elements will be given the same reference numbers throughout the drawings, and redundant description will be omitted.

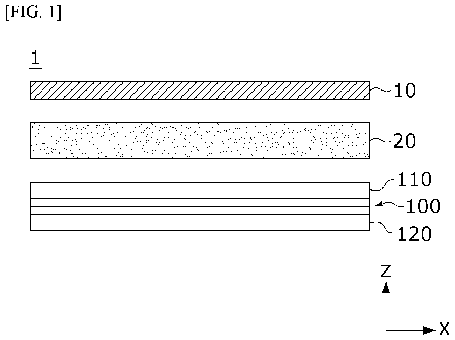

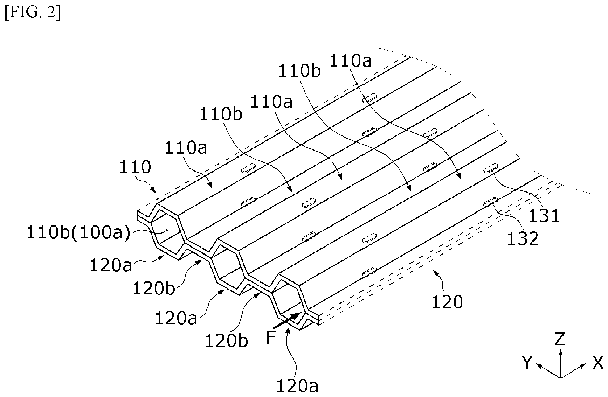

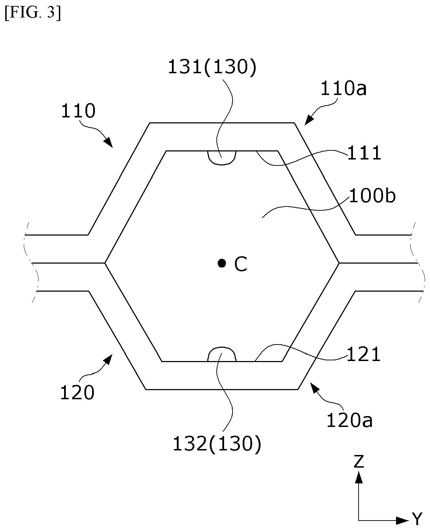

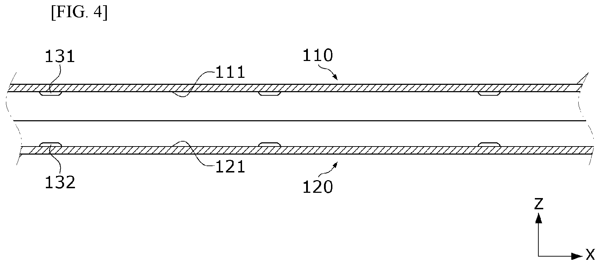

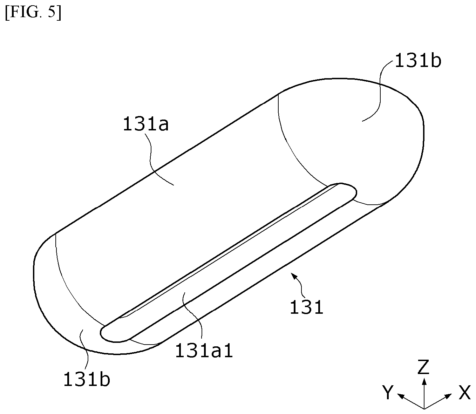

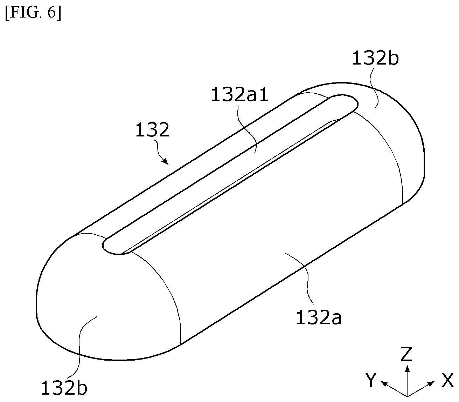

FIG. 1 is a schematic view illustrating a fuel cell according to an embodiment of the present disclosure. FIG. 2 is a schematic perspective view illustrating a portion of a bipolar plate for a fuel cell according to an embodiment of the present disclosure. FIG. 3 is a front view illustrating a portion of the bipolar plate for a fuel cell according to the embodiment of the present disclosure. FIG. 4 is a side view illustrating a portion of the bipolar plate for a fuel cell according to the embodiment of the present disclosure. FIG. 5 is an enlarged view illustrating a first protrusion according to an embodiment of the present disclosure. FIG. 6 is an enlarged view illustrating a second protrusion according to an embodiment of the present disclosure.

Referring to FIGS. 1 to 6, a fuel cell 1 according to an embodiment of the present disclosure includes a membrane electrode assembly (MEA) 10, a gas diffusion layer 20, and a bipolar plate 100 for a fuel cell. A channel 100a may be formed inside the bipolar plate 100 for a fuel cell.

In this specification, an X direction may be a length direction of the channel 100a, a Y direction may be a direction crossing the X direction and a width direction of the channel 100a, and a Z direction may be a direction perpendicular to the X direction and the Y direction and an upward direction or a downward direction from a center of the channel 100a.

The MEA 10 may convert chemical reaction energy between oxygen and hydrogen into electrical energy. The MEA 10 includes an anode electrode layer disposed at one side of an electrolyte membrane and a cathode electrode layer disposed at the other side of the electrolyte membrane with respect to the electrolyte membrane made of a polymer material.

The gas diffusion layer 20 may transfer electrons generated through an oxidation reaction of the anode electrode layer to the cathode electrode layer. The gas diffusion layer 20 may be disposed on the anode electrode layer and on the cathode electrode layer.

Referring again to FIGS. 1 to 6, the bipolar plate 100 for a fuel cell may separate hydrogen, oxygen, and a fluid and may uniformly distribute and supply the hydrogen, oxygen, and fluid to an entire surface of the MEA 10 to collect and transmit a current generated through an electrochemical reaction. In addition, the bipolar plate 100 for a fuel cell may support the MEA 10 and the gas diffusion layer 20.

The bipolar plate 100 for a fuel cell includes a first plate 110, a second plate 120, and a plurality of protrusions 130.

The first plate 110 may be in contact with the gas diffusion layer 20. The first plate 110 may include a combination of a plurality of concave portions 110a formed to be concave in the Z direction from one surface and a plurality of convex portions 110b formed to be convex in a direction opposite to the concave portion 110a.

The first plate 110 includes a first surface 111.

The first surface 111 may be formed in the concave portion 110a of the first plate 110. As shown in FIG. 3, the first surface 111 may be disposed above a center C of the channel 100a.

The second plate 120 may be coupled to the first plate 110. The second plate 120 may be provided in a shape that is symmetrical to the first plate 110. The second plate 120 may include a combination of a plurality of concave portions 120a formed to be concave from one surface and a plurality of convex portions 120b formed to be convex in a direction opposite to the concave portion 120a.

The second plate 120 includes a second surface 121.

The second surface 121 may be formed in the concave portion 120a of the second plate 120. As shown in FIG. 3, the second surface 121 may be disposed below the center of the channel 100a.

The channel 100a may be formed by coupling the first plate 110 and the second plate 120. More specifically, the concave portion 110a of the first plate 110 and the concave portion 120a of the second plate 120 may be connected to each other to form the channel. A cooling fluid F (hereinafter referred to as a "fluid") may flow in the channel 100a.

The channel 100a may be integrally formed by connecting a plurality of unit channels 100b disposed in the Y direction to each other. The fluid F may flow in the unit channel 100b. The unit channel 100b may be formed in the X direction.

The plurality of protrusions 130 may be spaced from each other in the unit channel 100b in a flow direction of the fluid F flowing into the unit channel 100b.

The plurality of protrusions 130 include a first protrusion 131 and a second protrusion 132.

Referring to FIG. 5, the first protrusion 131 may protrude from the first surface 111 toward the second surface 121 (in the Z direction).

The first protrusion 131 may collide with the fluid F flowing in the unit channel 100b. The fluid F colliding with the first protrusion 131 may generate an eddy as a flow thereof changes from a laminar flow to a turbulent flow. Due to the eddy, a friction coefficient, a heat transfer coefficient, and a mass transfer coefficient of the fluid F may be considerably increased as compared with that during a laminar flow. As a result, a heat transfer efficiency of the fluid F changed to a turbulent flow is increased as compared with that during a laminar flow, thereby increasing cooling efficiency.

The first protrusion 131 includes a first protruding body 131a and second protruding bodies 131b.

The first protruding body 131a is disposed in an oblong shape in the flow direction (X direction) of the fluid F flowing in the unit channel 100b. The first protruding body 131a may protrude from the first surface 111 toward the second surface 121 to have a round shape.

The first protruding body 131a may include a first groove 131a1.

The first groove 131a1 may be formed to be concave in a direction from the second surface 121 toward the first surface 111. A length of the first groove 131a1 may extend in the flow direction of the fluid F flowing in the unit channel 100b. The first groove 131a1 may be formed to be concave in a direction different from a direction in which the first protruding body 131a is disposed. The first groove 131a1 may extend from the first protruding body 131a to the second protruding body 131b.

The fluid F flowing toward the first protrusion 131 may collide with the first groove 131a1, and thus a flow thereof may change from a laminar flow to a turbulent flow. The fluid F colliding with the first groove 131a1 may flow along a shape of the first groove 131a1 to flow to the outside of the first protrusion 131.

The second protruding bodies 131b protrude in a round shape from both ends of the oblong shape of the first protruding body 131a. Accordingly, a ratio of the fluid F which collides and flows in a direction opposite to the flow direction may be reduced as compared with when the second protruding body 131b has a right-angled shape.

The fluid F flowing in the unit channel 100b may collide with the second protruding body 131b, and thus a flow thereof may change from a laminar flow to a turbulent flow. The fluid F colliding with the second protruding body 131b may be guided from the second protruding body 131b to the first protruding body 131a to flow.

Referring to FIG. 6, the second protrusion 132 may protrude from the second surface 121 toward the first surface 111 (in the Z direction). Also, the second protrusion 132 may be disposed to face the first protrusion 131 and may have a shape that is symmetrical to the first protrusion 131. Accordingly, the first protrusion 131 and the second protrusion 132 may be disposed to overlap each other in a direction from the first surface 111 toward the second surface 121.

The fluid F flowing in the unit channel 100b may regularly collide with a plurality of first protrusions 131 or a plurality of second protrusions 132 which are disposed apart from each other. Accordingly, turbulent changes in the fluid F may be regularly generated.

The second protrusion 132 may collide with the fluid F flowing in the unit channel 100b. The fluid F colliding with the second protrusion 132 may generate an eddy as a flow thereof changes from a laminar flow to a turbulent flow. Due to the eddy, a friction coefficient, a heat transfer coefficient, and a mass transfer coefficient of the fluid F may be considerably increased as compared with that during a laminar flow. As a result, a heat transfer efficiency of the fluid F changed to a turbulent flow is increased as compared with that during a laminar flow, thereby increasing cooling efficiency.

The second protrusion 132 may include a first protruding body 132a and second protruding bodies 132b.

The first protruding body 132a may be disposed in an oblong shape in the flow direction (X direction) of the fluid F flowing in the unit channel 100b. The first protruding body 132a may protrude from the second surface 121 toward the first surface 111 to have a round shape.

The first protruding body 132a may include a second groove 132a1.

The second groove 132a1 may be formed to be concave in a direction from the first surface 111 toward the second surface 121. A length of the second groove 132a1 extends in the flow direction of the fluid F flowing in the unit channel 100b. The second groove 132a1 is formed to be concave in a direction different from a direction in which the first protruding body 132a is disposed. The second groove 132a1 may extend from the first protruding body 132a to the second protruding body 132b.

The fluid F flowing toward the second protrusion 132 may collide with the second groove 132a1, and thus a flow thereof may change from a laminar flow to a turbulent flow. The fluid F colliding with the second groove 132a1 may flow along a shape of the second groove 132a1 to flow to the outside of the second protrusion 132.

The second protruding bodies 132b protrude in a round shape from both ends of the oblong shape of the first protruding body 132a. The fluid F flowing in the unit channel 100b may collide with the second protruding body 132b so that a flow thereof may be changed from a laminar flow to a turbulent flow. The fluid F colliding with the second protruding body 132b may be guided from the second protruding body 132b to the first protruding body 132a to flow.

In the present embodiment, although an example in which the first protrusion 131 is disposed on the first surface 111 and the second protrusion 132 is disposed on the second surface 121 is described, the present disclosure is not limited thereto. The first protrusion 131 may be disposed on the second surface 121, and the second protrusion 132 may be disposed on the first surface 111.

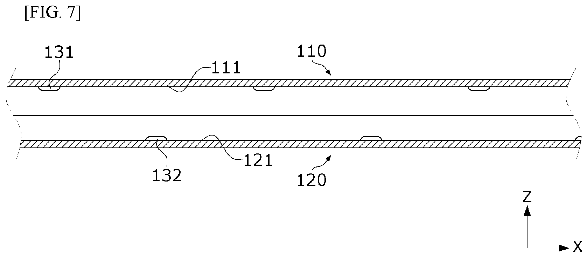

FIG. 7 is a view illustrating a state in which a second protrusion is disposed to not face a first protrusion according to an embodiment of the present disclosure.

Referring to FIG. 7, a first protrusion 131 and a second protrusion 132 may be disposed to not face each other in a direction from a first surface 111 to a second surface 121.

For example, when a plurality of first protrusions 131 are disposed apart from each other on the first surface 111, a plurality of second protrusions 132 may be disposed between the two first protrusions 131 on a second surface 121.

On the other hand, when the plurality of second protrusions 132 are disposed apart from each other on the second surface 121, the plurality of first protrusions 131 may be disposed between the two second protrusions 132 on the first surface 111.

Accordingly, a fluid F flowing in a unit channel 100b may irregularly collide with the first protrusion 131 or the second protrusion 132. Accordingly, turbulent changes in the fluid F may be irregularly generated.

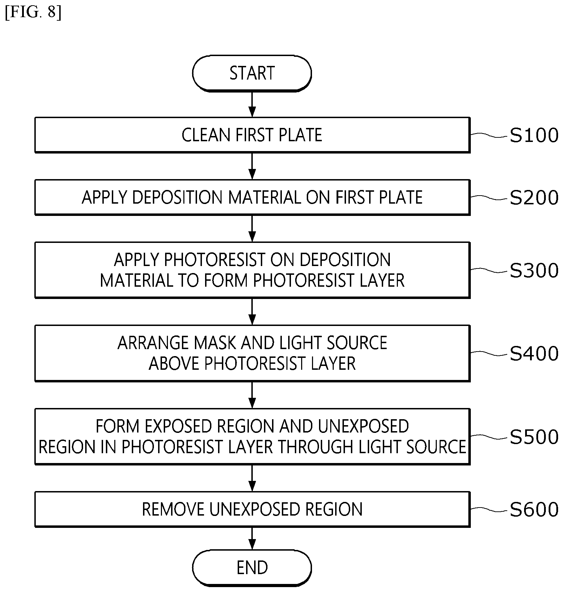

FIG. 8 is a flowchart illustrating a process in which a first protrusion is formed on a first plate through a photolithography process according to an embodiment of the present disclosure.

Referring to FIG. 8, a plurality of protrusions 130 may be formed through the following photolithography process. In the present embodiment, a process in which the first protrusion 131 is formed on a first plate 110 will be described.

The first protrusion may be formed on the first plate through operation S100 of cleaning the first plate, operation S200 of applying a deposition material on the first plate, operation S300 of applying a photoresist on the deposition material to form a photoresist layer, operation S400 of arranging a mask and a light source above the photoresist layer, operation S500 of forming an exposed region and an unexposed region in the photoresist layer through the light source, and operation S600 of removing the unexposed region.

Operation S100 of cleaning the first plate may include a process of performing cleaning to remove impurities or particles included on a surface of the first plate 110.

In operation S300 of applying the photoresist on the deposition material to form the photoresist layer, the photoresist may be applied through a spin coating method. In addition, after the photoresist layer is formed, a solvent remaining on the photoresist may be removed through a soft bake process.

In operation S400 of arranging the mask and the light source above the photoresist layer, the mask may be disposed above the photoresist layer, and the light source may be disposed above the mask. The mask may have a pattern in which a shape that is partially open is repeatedly disposed. The pattern may have a shape corresponding to a shape of an outer circumferential surface of the first protrusion 131.

In operation S500 of forming the exposed region and the unexposed region by light being transmitted to the photoresist layer through the light source, light emitted from the light source may pass through an open portion of the mask. When light passes through a shape of the open portion of the mask, the exposed region having a certain shape may be formed in the photoresist layer. On the other hand, a portion of the photoresist layer through which light does not pass remains as the unexposed region.

Operation S600 of removing the unexposed region may include an operation of cleaning the unexposed region through a liquid such as a developer. Through such a process, the photoresist layer is completely removed, and only the exposed region remains. In addition, after the unexposed region is cleaned with the liquid, a solvent remaining on the photoresist layer may be additionally removed through a hard bake process.

The first protrusion 131 formed through the above process may be formed to have a fine size. In addition, since the plurality of first protrusions 131 can be formed in an X direction at once using the mask having a plurality of patterns, a manufacturing time can be reduced.

In the present embodiment, although an example in which the first protrusion 131 is disposed on the first plate 110 through the photolithography process is described, the present disclosure is not limited thereto. A second protrusion 132 may also be formed on a second plate 120 through the photolithography process.

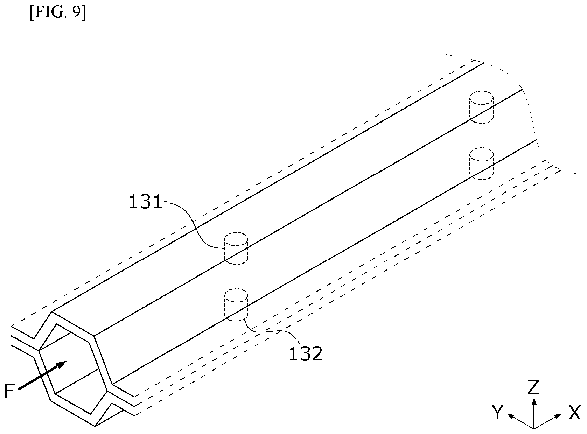

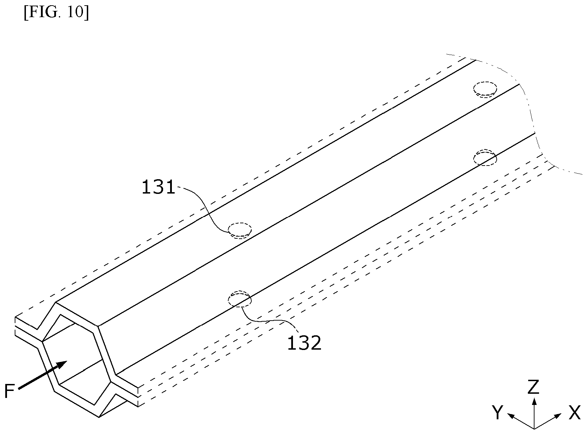

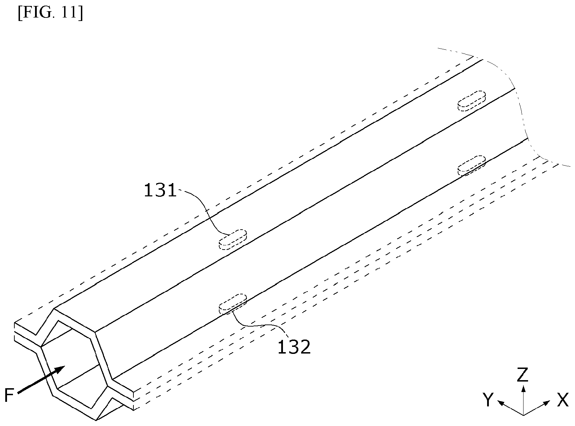

FIG. 9 is a view illustrating a first protrusions and a second protrusion according to another embodiment of the present disclosure. FIGS. 10 and 11 are views illustrating a first protrusion and a second protrusion according to other embodiments of the present disclosure.

Referring to FIG. 9, each of a first protrusion 131 and a second protrusion 132 may have a cylindrical shape.

The first protrusion 131 and the second protrusion 132 having the cylindrical shapes may have a shorter length than the first protrusion 131 and the second protrusion 132 having the oblong shapes shown in FIGS. 1 to 7 in a flow direction of a fluid F. In addition, a greater number of the first protrusions 131 and the second protrusions 132 may be disposed in a channel 100a as compared with the first protrusions 131 and the second protrusions 132 having the oblong shapes shown in FIGS. 1 to 7. Accordingly, a period in which a turbulent flow is formed may be shorter as compared with the first and second protrusions 131 and 132 in the oblong shapes shown in FIGS. 1 to 7.

Although not shown, the protrusion shown in FIGS. 1 to 7 and the protrusion shown FIG. 9 may each be disposed in a unit channel 100b.

For example, the protrusion shown in FIGS. 1 to 7 may be disposed on a first surface 111, and the protrusion shown in FIG. 9 may be disposed on a second surface 121. In addition, the protrusion shown in FIG. 9 may be disposed on the first surface 111, and the protrusion shown in FIGS. 1 to 7 may be disposed on the second surface 121.

Referring to FIG. 10, a first protrusion 131 and a second protrusion 132 may each protrude in a hemispherical shape toward a center of a channel 100a.

The first protrusion 131 and the second protrusion 132 protruding in the hemispherical shape may have a shorter length than the first protrusion 131 and the second protrusion 132 having the oblong shape shown in FIGS. 1 to 7. In addition, a greater number of the first protrusions 131 and the second protrusions 132 may be disposed in a channel 100a as compared with the first protrusions 131 and the second protrusions 132 having the oblong shapes shown in FIGS. 1 to 7. Accordingly, a period in which a turbulent flow is formed may be shorter as compared with the first and second protrusions 131 and 132 in the oblong shapes shown in FIGS. 1 to 7.

Although not shown, the protrusion shown in FIGS. 1 to 7 and the protrusion shown FIG. 10 may be disposed in a unit channel 100b.

For example, the protrusion shown in FIGS. 1 to 7 may be disposed on a first surface 111, and the protrusion shown in FIG. 10 may be disposed on a second surface 121. In addition, the protrusion shown in FIG. 10 may be disposed on the first surface 111, and the protrusion shown in FIGS. 1 to 7 may be disposed on the second surface 121.

Referring to FIG. 11, a first protrusion 131 and a second protrusion 132 may have oblong shapes in a flow direction (X direction) of a fluid F. The first protrusion 131 and the second protrusion 132 having the oblong shapes may quickly guide a turbulent flow in the flow direction of the fluid F as compared with the first protrusion 131 and the second protrusion 132 having the oblong shapes shown in FIGS. 1 to 7.

Although not shown, the protrusion shown in FIGS. 1 to 7 and the protrusion shown FIG. 11 may each be disposed in a unit channel 100b.

For example, the protrusion shown in FIGS. 1 to 7 may be disposed on a first surface 111, and the protrusion shown in FIG. 11 may be disposed on a second surface 121. In addition, the protrusion shown in FIG. 11 may be disposed on the first surface 111, and the protrusion shown in FIGS. 1 to 7 may be disposed on the second surface 121.

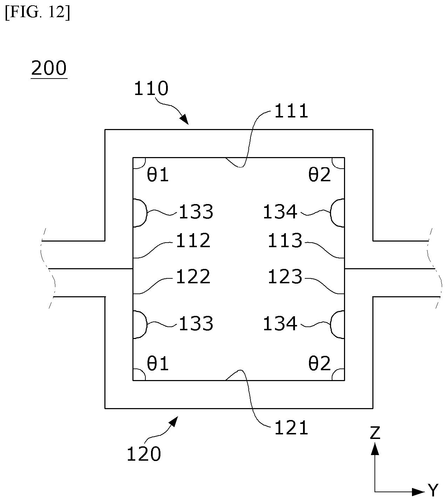

FIG. 12 is a view illustrating a bipolar plate for a fuel cell according to another embodiment of the present disclosure.

Referring to FIG. 12, a bipolar plate 200 for a fuel cell according to another embodiment of the present disclosure may further include third surfaces 112 and 122 and fourth surfaces 113 and 123.

The third surfaces 112 and 122 may be disposed in a channel 100a formed by coupling a first plate 110 and a second plate 120.

When the first plate 110 and the second plate 120 are coupled, the third surfaces 112 and 122 may each be disposed at one side of the first surface 111 and one side of the second surface 121.

The third surfaces 112 and 122 may form a first angle θ1 together with the first surface 111 and the second surface 121, respectively. The first angle θ1 may be between 90° and 110°. Preferably, the first angle θ1 may be between 90° and 100°. More preferably, the first angle θ1 may be between 90° and 95°.

This means that, as compared with when an angle between the third surfaces 112 and 122 and the first and second surfaces 111 and 121 exceeds the first angle θ1, an area of a unit channel 100b decreases.

Accordingly, as compared with when the angle between the third surfaces 112 and 122 and the first and second surfaces 111 and 121 exceeds the first angle θ1, due to a Venturi effect, a pressure inside the unit channel 100b is lowered, and thus a flow rate of a fluid F is increased, thereby shortening a time required for cooling.

In addition, the fourth surfaces 113 and 123 may be disposed in the channel 100a formed by coupling the first plate 110 and the second plate 120.

When the first plate 110 and the second plate 120 are coupled, the fourth surfaces 113 and 123 may be respectively disposed at the other side of the first surface 111 and the other side of the second surface 121. The fourth surfaces 113 and 123 may be disposed to face the third surfaces 112 and 122.

The fourth surfaces 113 and 123 may form a second angle θ2 together with the first surface 111 and the second surface 121, respectively. The second angle θ2 may be between 90° and 110°. Preferably, the second angle θ2 may be between 90° and 100°. More preferably, the second angle θ2 may be between 90° and 95°.

This means that, as compared with when an angle between the fourth surfaces 113 and 123 and the first and second surfaces 111 and 121 exceeds the second angle θ2, an area of the unit channel 100b decreases.

Accordingly, as compared with when the angle between the fourth surfaces 113 and 123 and the first and second surfaces 111 and 121 exceeds the second angle θ2, due to a Venturi effect, a pressure inside the unit channel 100b is lowered, and thus a flow rate of the fluid F is increased, thereby shortening a time required for cooling.

In addition, the bipolar plate 200 for a fuel cell according to another embodiment of the present disclosure may further include a third protrusion 133 and a fourth protrusion 134. The third protrusion 133 and the fourth protrusion 134 may have the same shape as the first protrusion 131 and the second protrusion 132 shown in FIGS. 1 to 7. Also, the third protrusion 133 and the fourth protrusion 134 may have the same shape as the first protrusion 131 and the second protrusion 132 shown in any one of FIGS. 9 to 11.

The third protrusion 133 and the fourth protrusion 134 may be respectively disposed on the third surfaces 112 and 122 and the fourth surfaces 113 and 123.

For example, the third protrusion 133 may be disposed on the third surfaces 112 and 122, and the fourth protrusion 134 may be disposed on the fourth surfaces 113 and 123. In addition, although not shown, the third protrusion 133 may be disposed on the fourth surfaces 113 and 123, and the fourth protrusion 134 may be disposed on the third surfaces 112 and 122. The third protrusion 133 and the fourth protrusion 134 may be disposed to face each other.

Also, although not shown, the third protrusion 133 and the fourth protrusion 134 may be disposed to not face each other.

For example, the third protrusion 133 may be disposed on the third surface 112 included in the first plate 110, and the fourth protrusion 134 may be disposed on the fourth surface 123 included in the second plate 120. In addition, the third protrusion 133 may be disposed on the third surface 122 included in the second plate 120, and the fourth protrusion 134 may be disposed on the fourth surface 113 included in the first plate 110.

Furthermore, the third protrusion 133 may be disposed on the fourth surface 113 included in the first plate 110, and the fourth protrusion 134 may be disposed on the third surface 122 included in the second plate 120. In addition, the third protrusion 133 may be disposed on the fourth surface 123 included in the second plate 120, and the fourth protrusion 134 may be disposed on the third surface 112 included in the first plate 110.

Accordingly, when any one of the third protrusion 133 and the fourth protrusion 134 is damaged, since only a plate including the damaged protrusion can be replaced, a time required for replacing and repairing can be reduced.

According to embodiments of the present disclosure, a fluid flowing in a channel collides with a plurality of protrusions, and thus a flow thereof is changed from a laminar flow to a turbulent flow to increase a heat transfer coefficient, thereby increasing the heat transfer efficiency of the fluid. Accordingly, the cooling efficiency of the cooling fluid can be improved.

In addition, according to embodiments of the present disclosure, since the cooling efficiency of a fluid is improved to prevent a bipolar plate from being burned, the operating efficiency of a fuel cell can be increased.

In addition, according to embodiments of the present disclosure, the cooling efficiency of a cooling fluid can be improved, and thus a supply amount of the cooling fluid can be reduced, thereby reducing costs used for cooling.

Although the present disclosure has been described with reference to the embodiments, it will be understood by those skilled in the art that various modifications and changes can be made within the scope of the present disclosure as defined in the appended claims.

## Claims

1. A bipolar plate for a fuel cell, comprising:
a first plate (110);
a second plate (120) coupled to the first plate (110) to form a channel (100a) in which a fluid (F) flows; and
a plurality of protrusions (130) disposed apart from each other in the channel (100a) in a flow direction of the fluid (F),
wherein:
the channel (100a) includes a first surface (111) of the first plate (110) and a second surface (121) of the second plate (120) facing the first surface (111),
the plurality of protrusions (130) include a first protrusion (131) protruding from the first surface (111) toward the second surface (121), and a second protrusion (132) protruding from the second surface (121) toward the first surface (111), and each of the first protrusion (131) and the second protrusion (132) includes:
a first protruding body (131a) disposed in an oblong shape in the flow direction of the fluid (F); and
second protruding bodies (131b) protruding in a round shape from both ends of the oblong shape of the first protruding body (131a).

2. The bipolar plate of claim 1, wherein:
the first protruding body (131a) of the first protrusion (131) protrudes from the first surface (111) toward the second surface (121) to have the round shape, and
the first protruding body (131a) of the second protrusion (132) protrudes from the second surface (121) toward the first surface (111) to have the round shape.

3. The bipolar plate of claim 1 or 2, wherein:
the first protruding body (131a) of the first protrusion (131) includes a first groove (131a1) that is concave in a direction from the second surface (121) toward the first surface (111), and
the first protruding body (131a) of the second protrusion (132) includes a second groove (132a1) that is concave in a direction from the first surface (111) toward the second surface (121).

4. The bipolar plate of claim 3, wherein the first groove (131a1) and the second groove (132a1) extend in the flow direction of the fluid (F).

5. The bipolar plate of any one of claims 1 to 4, wherein each of the first protrusion (131) and the second protrusion (132) has a cylindrical shape.

6. The bipolar plate of any one of claims 1 to 5, wherein each of the first protrusion (131) and the second protrusion (132) protrudes in a hemispherical shape toward a center of the channel (100a).

7. The bipolar plate of any one of claims 1 to 6, wherein the first protrusion (131) and the second protrusion (132) are disposed to overlap each other in a direction from the first surface (111) toward the second surface (121).

8. The bipolar plate of any one of claims 1 to 6, wherein the first protrusion (131) and the second protrusion (132) are disposed to not overlap each other in a direction from the first surface (111) toward the second surface (121).

9. The bipolar plate of any one of claims 1 to 8, wherein:
the channel (100a) further includes a third surface (112, 122) between the first surface (111) and the second surface (121) and a fourth surface (113, 123) facing the third surface (112, 122),
the third surface (112, 122) has a portion included in the first plate (110) and another portion included in the second plate (120),
the fourth surface (113, 123) has a portion included in the first plate (110) and another portion included in the second plate (120), and
an angle between the first surface (111) and the third surface (112, 122) is in a range of 90° to 110°.

10. The bipolar plate of claim 9, wherein the plurality of protrusions (130) include:
a third protrusion (133) disposed on any one of the third surface (112, 122) and the fourth surface (113, 123); and
a fourth protrusion (134) disposed on a remaining one of the third surface (112, 122) and the fourth surface (113, 123).

11. A fuel cell comprising:
a membrane electrode assembly (10);
a gas diffusion layer (20) disposed at each of one side and an opposing side of the membrane electrode assembly (10); and
a bipolar plate (100, 200) according to any of claims 1 to 10 disposed outside the gas diffusion layer (20).

12. The fuel cell of claim 11, wherein the plurality of protrusions (130) are formed through a photolithography process.

## Patentansprüche

1. Bipolarplatte für eine Brennstoffzelle, aufweisend:
eine erste Platte (110),
eine zweite Platte (120), die mit der ersten Platte (110) gekoppelt ist, um einen Kanal (100a) auszubilden, in dem ein Fluid (F) strömt, und
eine Mehrzahl von Vorsprüngen (130), die im Abstand voneinander in dem Kanal (100a) in einer Strömungsrichtung des Fluids (F) angeordnet sind,
wobei:
der Kanal (100a) eine erste Fläche (111) der ersten Platte (110) und eine zweite Fläche (121) der zweiten Platte (120) aufweist, die der ersten Fläche (111) zugewandt ist,
die Mehrzahl von Vorsprüngen (130) aufweist: einen ersten Vorsprung (131), der von der ersten Fläche (111) in Richtung zu der zweiten Fläche (121) hervorsteht, und einen zweiten Vorsprung (132), der von der zweiten Fläche (121) in Richtung zu der ersten Fläche (111) hervorsteht, und
jeder von dem ersten Vorsprung (131) und dem zweiten Vorsprung (132) aufweist:
einen ersten hervorstehenden Körper (131a), der in einer länglichen Form in Strömungsrichtung des Fluids (F) angeordnet ist, und
zweite hervorstehende Körper (131b), die in einer runden Form von beiden Enden der länglichen Form des ersten hervorstehenden Körpers (131a) hervorstehen.

2. Bipolarplatte gemäß Anspruch 1, wobei:
der erste hervorstehende Körper (131a) des ersten Vorsprungs (131) von der ersten Fläche (111) in Richtung zu der zweiten Fläche (121) hervorsteht, um die runde Form zu haben, und
der erste hervorstehende Körper (131a) des zweiten Vorsprungs (132) von der zweiten Fläche (121) in Richtung zu der ersten Fläche (111) hervorsteht, um die runde Form zu haben.

3. Bipolarplatte gemäß Anspruch 1 oder 2, wobei:
der erste hervorstehende Körper (131a) des ersten Vorsprungs (131) eine erste Nut (131a1) aufweist, die in einer Richtung von der zweiten Fläche (121) zu der ersten Fläche (111) hin konkav ist, und
der erste hervorstehende Körper (131a) des zweiten Vorsprungs (132) eine zweite Nut (132a1) aufweist, die in einer Richtung von der ersten Fläche (111) zu der zweiten Fläche (121) hin konkav ist.

4. Bipolarplatte gemäß Anspruch 3, wobei sich die erste Nut (131a1) und die zweite Nut (132a1) in der Strömungsrichtung des Fluids (F) erstrecken.

5. Bipolarplatte gemäß irgendeinem der Ansprüche 1 bis 4, wobei jeder von dem ersten Vorsprung (131) und dem zweiten Vorsprung (132) eine zylindrische Form hat.

6. Bipolarplatte gemäß irgendeinem der Ansprüche 1 bis 5, wobei jeder von dem ersten Vorsprung (131) und dem zweiten Vorsprung (132) in einer halbkugelförmigen Form in Richtung zu einer Mitte des Kanals (100a) hervorsteht.

7. Bipolarplatte gemäß irgendeinem der Ansprüche 1 bis 6, wobei der erste Vorsprung (131) und der zweite Vorsprung (132) angeordnet sind, um einander in einer Richtung von der ersten Fläche (111) zu der zweiten Fläche (121) hin zu überlappen.

8. Bipolarplatte gemäß irgendeinem der Ansprüche 1 bis 6, wobei der erste Vorsprung (131) und der zweite Vorsprung (132) angeordnet sind, um einander in einer Richtung von der ersten Fläche (111) zu der zweiten Fläche (121) hin nicht zu überlappen.

9. Bipolarplatte gemäß irgendeinem der Ansprüche 1 bis 8, wobei
der Kanal (100a) ferner eine dritte Fläche (112, 122) zwischen der ersten Fläche (111) und der zweiten Fläche (121) und eine vierte Fläche (113, 123) aufweist, die der dritten Fläche (112, 122) zugewandt ist,
die dritte Fläche (112, 122) einen Abschnitt, der in der ersten Platte (110) enthalten ist, und einen anderen Abschnitt aufweist, der in der zweiten Platte (120) enthalten ist,
die vierte Fläche (113, 123) einen Abschnitt, der in der ersten Platte (110) enthalten ist, und einen anderen Abschnitt aufweist, der in der zweiten Platte (120) enthalten ist, und
ein Winkel zwischen der ersten Fläche (111) und der dritten Fläche (112, 122) in einem Bereich von 90° bis 110° liegt.

10. Bipolarplatte gemäß Anspruch 9, wobei die Mehrzahl von Vorsprüngen (130) aufweist:
einen dritten Vorsprung (133), der auf irgendeiner von der dritten Fläche (112, 122) und der vierten Fläche (113, 123) angeordnet ist, und
einen vierten Vorsprung (134), der auf einer verbleibenden von der dritten Fläche (112, 122) und der vierten Fläche (113, 123) angeordnet ist.

11. Brennstoffzelle, aufweisend:
eine Membran-Elektroden-Anordnung (10),
eine Gasdiffusionsschicht (20), die an jeder von einer Seite und einer gegenüberliegenden Seite der Membran-Elektroden-Anordnung (10) angeordnet ist, und
eine Bipolarplatte (100, 200) gemäß irgendeinem der Ansprüche 1 bis 10, die außerhalb der Gasdiffusionsschicht (20) angeordnet ist.

12. Brennstoffzelle gemäß Anspruch 11, wobei die Mehrzahl von Vorsprüngen (130) durch einen Photolithographieprozess ausgebildet ist.

## Revendications

1. Plaque bipolaire pour une pile à combustible, comprenant :
une première plaque (110) ;
une deuxième plaque (120) couplée à la première plaque (110) pour former un canal (100a) dans lequel s'écoule un fluide (F) ; et
une pluralité de saillies (130) disposées à l'écart les unes des autres dans le canal (100a) dans une direction d'écoulement du fluide (F),
dans laquelle :
le canal (100a) comprend une première surface (111) de la première plaque (110) et une deuxième surface (121) de la deuxième plaque (120) faisant face à la première surface (111),
la pluralité de saillies (130) comprend une première saillie (131) faisant saillie de la première surface (111) vers la deuxième surface (121), et une deuxième saillie (132) faisant saillie de la deuxième surface (121) vers la première surface (111), et
chacune de la première saillie (131) et de la deuxième saillie (132) comprend :
un premier corps saillant (131a) disposé dans une forme oblongue dans la direction d'écoulement du fluide (F) ; et
des deuxièmes corps saillants (131b) faisant saillie dans une forme ronde à partir des deux extrémités de la forme oblongue du premier corps saillant (131a).

2. Plaque bipolaire selon la revendication 1, dans laquelle :
le premier corps saillant (131a) de la première saillie (131) fait saillie de la première surface (111) vers la deuxième surface (121) pour avoir la forme ronde, et
le premier corps saillant (131a) de la deuxième saillie (132) fait saillie de la deuxième surface (121) vers la première surface (111) pour avoir la forme ronde.

3. Plaque bipolaire selon la revendication 1 ou 2, dans laquelle :
le premier corps saillant (131a) de la première saillie (131) comprend une première rainure (131a1) qui est concave dans une direction de la deuxième surface (121) vers la première surface (111), et
le premier corps saillant (131a) de la deuxième saillie (132) comprend une deuxième rainure (132a1) qui est concave dans une direction de la première surface (111) vers la deuxième surface (121).

4. Plaque bipolaire selon la revendication 3, dans laquelle la première rainure (131a1) et la deuxième rainure (132a1) s'étendent dans la direction d'écoulement du fluide (F).

5. Plaque bipolaire selon l'une quelconque des revendications 1 à 4, dans laquelle chacune de la première saillie (131) et de la deuxième saillie (132) a une forme cylindrique.

6. Plaque bipolaire selon l'une quelconque des revendications 1 à 5, dans laquelle chacune de la première saillie (131) et de la deuxième saillie (132) fait saillie dans une forme hémisphérique vers un centre du canal (100a).

7. Plaque bipolaire selon l'une quelconque des revendications 1 à 6, dans laquelle la première saillie (131) et la deuxième saillie (132) sont disposées de manière à se chevaucher dans une direction de la première surface (111) vers la deuxième surface (121).

8. Plaque bipolaire selon l'une quelconque des revendications 1 à 6, dans laquelle la première saillie (131) et la deuxième saillie (132) sont disposées de manière à ne pas se chevaucher dans une direction de la première surface (111) vers la deuxième surface (121).

9. Plaque bipolaire selon l'une quelconque des revendications 1 à 8, dans laquelle :
le canal (100a) comprend en outre une troisième surface (112, 122) entre la première surface (111) et la deuxième surface (121) et une quatrième surface (113, 123) faisant face à la troisième surface (112, 122),
la troisième surface (112, 122) a une partie incluse dans la première plaque (110) et une autre partie incluse dans la deuxième plaque (120),
la quatrième surface (113, 123) a une partie incluse dans la première plaque (110) et une autre partie incluse dans la deuxième plaque (120), et
un angle entre la première surface (111) et la troisième surface (112, 122) est dans une plage de 90° à 110°.

10. Plaque bipolaire selon la revendication **9,** dans laquelle la pluralité de saillies (130) comprend :
une troisième saillie (133) disposée sur l'une quelconque de la troisième surface (112, 122) et de la quatrième surface (113, 123) ; et
une quatrième saillie (134) disposée sur l'une restante de la troisième surface (112, 122) et de la quatrième surface (113, 123).

11. Pile à combustible, comprenant :
un ensemble membrane-électrode (10) ;
une couche de diffusion de gaz (20) disposée sur chacun d'un côté et d'un côté opposé de l'ensemble membrane-électrode (10) ; et
une plaque bipolaire (100, 200) selon l'une quelconque des revendications 1 à 10, disposée à l'extérieur de la couche de diffusion de gaz (20).

12. Pile à combustible selon la revendication 11, dans laquelle la pluralité de saillies (130) est formée par un procédé de photolithographie.
